# EUROPEAN PATENT SPECIFICATION

(11) **EP 3 574 865 B1**
(45) Date of publication and mention of the grant of the patent: **07.07.2021**
(21) Application number: 18175037.3
(22) Date of filing: 30.05.2018
(51) Int. Cl.: A61C 5/42

(54) **ENDODONTIC INSTRUMENT**
ENDODONTISCHES INSTRUMENT
INSTRUMENT ENDODONTIQUE

(43) Date of publication of application: 04.12.2019
(73) Proprietor: Coltène GmbH + Co. KG, 89129 Langenau (DE)
(72) Inventor: PIASECKI, Lucila, Cascavel 85801-120, Paranà (BR)
(74) Representative: Hepp Wenger Ryffel AG

(56) References cited:
- EP-A1- 2 368 517
- WO-A1-01/15832
- WO-A1-86/05967
- FR-A1- 2 735 012
- US-A- 5 836 765
- US-A1- 2005 084 818
- US-A1- 2008 227 053

## Description

The invention relates to an endodontic instrument for anatomically shaping a root canal of a human tooth, as defined in claim 1.

Dentists use various types of endodontic instruments to clean and widen root canals. The dentist typically accesses the root canal through the surface of a tooth that is to be treated. Thereafter, the root canal is cleaned and widened with endodontic instruments such as files or rasps. The root canal that has been prepared in this way is filled with a filling material by the dentist and is finally sealed.

For the cleaning and shaping of the root canal, the dentist has access to a range of flexible files. The files usually have different diameters for cleaning and widening the root canal successively. For a thorough and successful root canal treatment, complete removal of pulp tissue, microorganisms and debris is essential. Improperly cleaned root canals can require reprocessing of the treatment or can lead to a loss of the tooth.

In order to ensure complete removal of infected material and to ease the subsequent filling of the root canal, dentists not only remove the dental pulp tissue but also trim and shape the root canal itself. The bore is usually widened by working the ductal system with a series of files of cylindrical shape with increasing diameter.

While shaping of the root canal is considered an essential aspect of the treatment, the task should be accomplished without altering the diameter and position of the apical foramen. Undesirable deviation from the natural canal (canal transportation) can potentially cause ledging and stripping perforations. Also, unnecessary weakening of the dentinal walls in any part of the tooth can be a consequence of excessive shaping and should be avoided. A minimal remaining dentine thickness of 0.3 mm is generally considered critical for a dental organ.

Eccentric instruments to perform mechanical root canal cleaning have been suggested in the state of the art in order to perform convenient and efficient root canal shaping.

For instance, FR2735012 discloses a dental surgery instrument for mechanical widening of the first (distal) two thirds of the dental root canal. The instrument is characterised in that it has a conical elongated rod with an abrasive surface fixed to a head; the rod is not aligned with the axis of the head of the instrument.

US 2008/0227053 discusses a device for preparing an endodontic cavity, the working part having an axis offset in parallel to a centred reference axis, in order to generate a theoretical volume of revolution. The volume of revolution is cylindrical.

Document EP2368517 discloses an endodontic instrument where the axis of a working part may be offset in parallel to a central axis through the head portion of the instrument. The file is characterised in that it can be fitted on a handpiece allowing for rotating or alternating movements.

The eccentric endodontic instruments known in the state of the art, however, are made of materials, having significant cutting force when applied to the dentine material of the inner walls of a root canal. The described materials, especially conventional stainless steel alloys and nickel titanium (NiTi) alloys having a substantial austenite share, have a high restoring force. Such high restoring force invariably leads to considerable shaping effects on the natural root canal and, therefore, can cause unnecessary loss of dentine material.

It is thus an object of the present invention, to overcome the problems in the prior art. In particular, it is an object of the invention to provide an instrument, by which the pulp tissue, microorganisms, debris and the dentine immediately surrounding the root canal and infected with bacterial germs can be removed substantially in their entirety. At the same time, treatment with the instrument shall respect the original anatomy of the root canal and preserve the healthy dentine to a very high extent in any part of the tooth.

This object is solved by the features of the independent claim.

The invention relates to an endodontic instrument for anatomically shaping a root canal of a human tooth. The instrument has a base portion, which can be mounted on a holding device and can be rotated around a reference axis A, and has a working part with an abrasive surface, which extends from the base portion.

At least a part of the working part of the instrument has an axis which is arranged angular with respect to a reference axis A such that the central axis of the base portion and the central axis of at least a part of the working portion enclose an angle α. Additionally or alternatively, at least a part of the working part of the instrument can be offset in parallel to the reference axis A of the base member by a distance r. The endodontic instrument is further characterised in that the working part is made of a flexible material having an upper yield strength of less than 200 MPa, preferably 70 to 180 MPa (measured according to EN ISO 6892-1).

The upper yield strength is the point on a stress-strain curve that indicates the limit of elastic behaviour and the beginning of plastic behaviour. It depends on the strain measured immediately before the moment of plastic deformation. Material having low yield strength will undergo plastic deformation even under low external forces. Such materials have low restitution abilities and are highly adaptive. The yield strength (upper yield strength) is measured according to EN ISO 6892-1:2016 B, under conditions according to the specifications of said standards and by applying stress rates according to in Table 3 of the said standards.

Conventional materials for manufacturing files for endodontic instruments are stainless steel or nickel titanium alloys (Ni-Ti). Stainless steel alloys typically used in endodontics have a yield strength of 250 MPa and above. NiTi alloys typically used for endodontic instruments have a yield strength of more than 200 and up to 700 MPa in austenite and a slightly lower yield strength in martensite state. Conventional endodontic instruments thus typically have a yield strength of more than 200 MPa. When applied to a root canal, such high resilience materials abrade the healthy dentine and substantially form the root canal. They can have a greater impact when the canal is severely curved. This is all the more true when the dental surgery instrument describes a rotational working cone with a potentially larger diameter than the root canal.

By using a file having an upper yield strength of less than 200 MPa, the benefits of an eccentrically arranged working part can be ensured while avoiding the disadvantages of an enlarged rotational volume. Due to the rotational movement, the entire internal surface of the root canal can be steadily processed, regardless of whether or not the canal has a circular or ellipsoid diameter and whether or not the length of the canal is straight or curved. Since the mechanical stress experienced by the file during rotation within the root canal exceeds the yield strength of the material of which the endodontic file is made, the endodontic file undergoes continuous deformation during rotation. The enlarged working cone also facilitates accessibility of the root canal by allowing the dentist greater flexibility in the choice of angle for holding the file.

The alloys for endodontic files based on nickel and/or titanium can be chosen from the following materials: α-titanium alloys; β-titanium alloys; α,β-titanium alloys; nickel-titanium alloys, in particular stoichiometric NiTi alloys or approximately equiatomic NiTi alloys, for example 50.8%Ti/49.2%Ni, 46% Ti/54% Ni, 50.0%Ti/50.0%Ni. NiTi alloys can also contain additives chosen from the group consisting of niobium, copper, chromium, cobalt, hafnium, vanadium and palladium. In any case the material should be in compliance with the standards as defined by ASTM F2063-12. A proportion of at least 40 atomic percent Ti is preferred.

Alternatively, materials consisting of or comprising stainless steel can be used for the preparation of endodontic files. It is particularly preferred that the stainless steel is not hardened and/or not hardenable.

By providing an eccentric file made of the mentioned materials with a yield strength considerably lower than conventional steel or NiTi shape memory alloys, the original shape and position of the root canal can be respected and the healthy dentine can be preserved to a high extent in any part of the tooth. The highly flexible shank of the instrument during rotation closely follows the form of the endodontic cavity and continuously adapts to the inner walls of such dental canal.

If the material chosen for the endodontic file is an alloy of stainless steel, this choice in addition has economic advantages. Stainless steel products can be manufactured more readily and at lower expenses than blanks based on nickel titanium alloys.

In a preferred embodiment, the endodontic instrument has a central reference axis A, defined by the base member, and at least a part of the working part of the instrument is offset in parallel to the reference axis (A) of the base member. The distance r is preferably chosen between 0.1 and 1.2 mm, preferably between 0.3 and 0.9 mm, most preferably between 0.4 and 0.7 mm.

In an alternative embodiment, the endodontic instrument has a central reference axis A, defined by the base portion and at least a part of the working portion of the instrument encloses an angle α greater than zero with regard to the central axis of the base portion A. The angle alpha is preferably chosen between 0.01° and 20°, preferably between 0.1° and 15°, most preferably between 1° and 10°.

It is preferred that the working part of the file has a tip diameter of 0.15 to 0.60 mm, preferably from 0.25 to 0.40 mm, and a taper of .01 to .08, preferably from .02 to .06. By taper is meant the amount which the file diameter increases each millimetre along the working surface from the tip towards the handle on average. The invention is though not limited to files having continuous taper. Files having variable taper are equally included.

It is another advantage of the present invention that the diameter of the working part of the file can be chosen considerably smaller than the diameter of the natural root canal. Also, the diameter of the working part can be chosen substantially smaller than the diameter of conventional instruments for root canal treatment.

The eccentric file can work an effective rotational radius greater than the radius of its own shape. Thus, the diameter of the shank can be reduced. Due to the rotational movement, the entire internal surface of the root canal can be processed, regardless of whether or not the canal has a circular or ellipsoid diameter and whether or not the length of the canal is straight or curved.

The reduced diameter of the working part of the file has several beneficial effects. First, a slim shank allows for even lower restitution ability because the forming force depends *inter alia* on the geometry of the sample under stress. Second, due to the small diameter the instrument experiences less friction and torsional stress. Thus, fatigue effects can be mitigated and the risk of failure due to breakage is lowered. Third, a dental surgery instrument with considerably smaller diameter in comparison to the surrounding root canal does not run a risk of being blocked during rotation. In contrast, the freely movable instrument can withstand high rotational speed which additionally fosters the supple adaptation of the working part to the surrounding walls. Further advantages are economic production since less and readily available materials (for example stainless steel) can be used to manufacture the endodontic instrument.

In a preferred embodiment, the endodontic instrument is assembled such that the holding device is a handle or a handle having a drive engine. Most preferably, the working part is mounted on a holding device having a drive engine.

Such drive engine can provide for the necessary rotational speed of working part. The resulting centrifugal force is transferred by the working part to the surrounding inner root canal walls. Such centrifugal force improves continuous alignment of the file with the dentine surface. A more accurate cleaning can be achieved. The drive engine can be configured to provide for rotational and/or alternating movements and any combinations of such movements.

The invention also relates to the features that will become evident from the following examples and description of the drawings. However, it should be understood that the invention is not limited to the specific details of these examples and drawings but is only limited by the scope of the appended claims.
- Figure 1:: shows a perspective view of an embodiment of the invention where the working part is offset in parallel to the reference axis of the base portion
- Figure 2:: shows a perspective view of an embodiment of the invention where the working part is arranged angular with respect to a reference axis of the base portion
- Figure 3:: shows a perspective view of an alternative embodiment of the invention where only a part of the working portion of the instrument is offset in parallel to the reference axis of the base portion.

### Example

A set of 12 eccentric instruments having a working part offset in parallel to the main axis of the base portion by 0.5 mm, having a tip diameter of 0.25 mm and a continuous taper of .02, were prepared.

Three files were made of the same alloy each, chosen from the group of:
- austenitic steel, containing shares of ≤0.07 C, 0.80 Si, 0.80 Mn, 19.0 Cr and 10.0 Ni , the balance being composed of iron, having an upper yield strength of 175 MPa (Grp 1);
- martensitic steel, containing shares of 0.07 C, 0.40 Si, 0.80 Mn, 12.5 Cr, 1.80 Ni and 0.30 Mo, the balance being composed of iron, having an upper yield strength of 440 MPa (Grp 2);
- NiTi alloy consisting of 50.0%Ni and 50.0%Ti having undergone heat treatment at 450°C for 30 min, having an upper yield strength of 95 MPa (Grp 3);
- untreated NiTi alloy consisting of 56.02%Ni and 43.98%Ti having an upper yield strength of 380 MPa (Grp 4).

Three files of each material were tested on 12 intact - though extracted - human teeth which had not previously been treated with an endodontic instrument. The teeth were cleaned and scanned using micro-computed tomography. The teeth were randomly divided into groups of 3 and assigned to treatment by endodontic instruments of one of the above groups. Perapical radiographs were created in order to evaluate the preoperative shape of the pulp chambers. The root canal was accessed by providing suitable cavities and afterwards treated by means of a file of the assigned group. The teeth were scanned again and changes introduced by the shaping activity of the file were assessed using micro-computed tomography. The variations in volume, surface and cross-sectional shape were evaluated qualitatively on a scale ranging from low, moderate and substantial to critical. The results are displayed the following table:

| | Variation in volume | Variation in surface | Variation in cross-sectional shape |
|---|---|---|---|
| Grp 1 | low | moderate | moderate |
| Grp 2 | substantial | substantial | critical |
| Grp 3 | low | low | low |
| Grp 4 | substantial | moderate | substantial |

As an overall result, the files of Grp 1 and 3 showed only little pronounced variation in volume, surface and cross-sectional shape in comparison to the preoperative status of the root canal. This result is desirable in the view of preserving the natural healthy dentine to a high extent. The files pertaining to Grp 4 showed only satisfactory results, while unsatisfactory results were observed in the postoperative root canals treated with files made of martensitic steel (Grp 2).

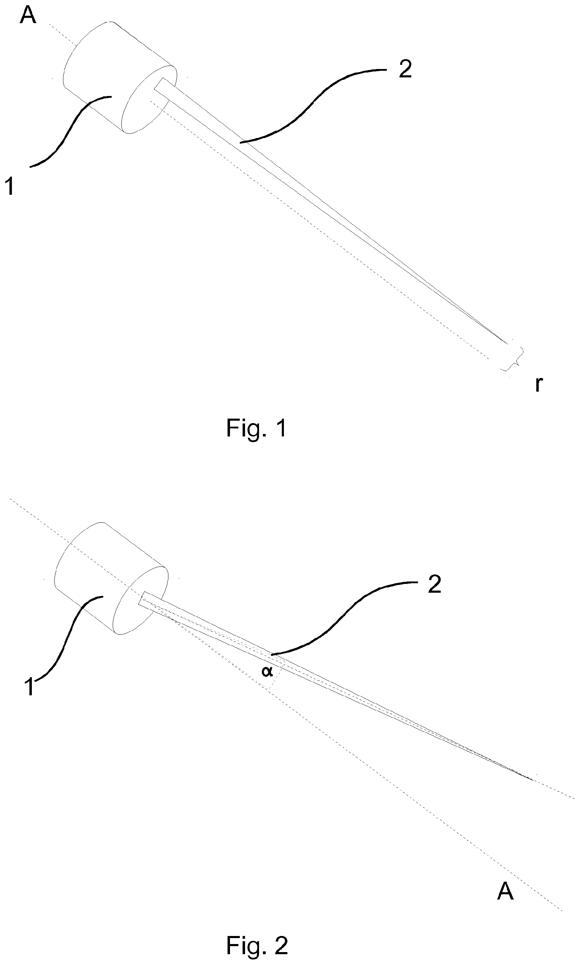

In Figure 1, an endodontic instrument according the invention is shown. The base portion 1 has a central axis A and can be mounted on a holding device. Preferably, the holding device is engine driven and rotates the mounted base portion 1 concentrically around reference axis A. The endodontic instrument further has a working part 2 with an abrasive surface which extends from the base portion 1 and has an axis which is offset in parallel to the reference axis A of the base portion 1 by a distance r .

In Figure 2, an endodontic instrument is shown. The base portion 1 has a central axis A and can be mounted on a holding device. Preferably, the holding device is engine driven and rotates the mounted base portion 1 concentrically around reference axis A. The endodontic instrument further has a working part 2 with an abrasive surface which extends from the base portion 1 and has an axis which is arranged angular with respect to a reference axis A. The central axis A of the base portion 1 and the central axis of working protion 2 describe an angle α.

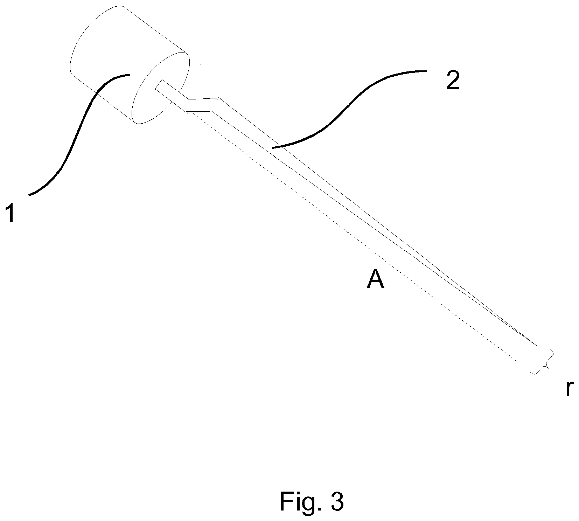

Figure 3 shows an alternative embodiment of the invention where a major portion of the working part is offset in parallel to the reference axis of the base portion. In this embodiment, working part 2 is mounted concentrically to the base portion and only partially deflected from reference axis A due to a curved shape of the working part.

## Claims

1. An endodontic instrument for anatomically shaping a root canal of a human tooth,
- having a base portion (1), which can be mounted on a holding device and can be rotated around a reference axis (A), and
- having a working part (2) with an abrasive surface, which extends from the base portion (1) and has an axis, wherein
- at least a part of the working part (2) is arranged angular with respect to the reference axis (A), wherein the reference axis (A) corresponds to the central axis of the base portion (1) and encloses an angle α with the central axis of the working part (2), and/or
- at least a part of the working part (2) is offset in parallel to the reference axis (A) of the base portion (1) by a distance r;
**characterised in that** the working part is made of a flexible material having an upper yield strength of less than 200 MPa, preferably of 70 to 180 MPa, measured according to EN ISO 6892-1.

2. An endodontic instrument according to claim 1, wherein the flexible material is a metallic material, preferably an alloy of stainless steel or a nickel titanium alloy.

3. An endodontic instrument according to claim 1 or 2, wherein at least a part of the working part (2) is offset in parallel to the reference axis (A) of the base portion (1), and the distance r is between 0.1 and 1.2 mm, preferably between 0.3 and 0.9 mm, most preferably between 0.4 and 0.7 mm.

4. An endodontic instrument according to claim 1 or 2, wherein the angle α enclosed by the central axis (A) of the base portion (1) and the central axis of the working part (2) is between 0.01° and 20°, preferably between 0.1 and 15°, most preferably between 1° and 10°.

5. An endodontic instrument according to any of claims 1 to 4, wherein the working part (2) has a tip diameter of 0.15 to 0.6C mm, preferably from 0.25 to 0.40 mm, and/or a taper of .01 to .08, preferably from .02 to .06.

6. An endodontic instrument according to any of claims 1 to 5, wherein the endodontic instrument further comprises a holding device comprising a handle or a drive engine.

## Patentansprüche

1. Endodontisches Instrument zur anatomischen Formgebung eines Wurzelkanals eines menschlichen Zahnes,
- mit einem Basisteil (1), das an einer Haltevorrichtung montierbar und um eine Bezugsachse (A) drehbar ist, und
- mit einem Arbeitsteil (2) mit einer abrasiven Oberfläche, das sich von dem Basisabschnitt (1) aus erstreckt und eine Achse aufweist, wobei zumindest ein Teil des Arbeitsteils (2)
- winklig zur Bezugsachse (A) angeordnet ist, wobei die Bezugsachse (A) mit der Mittelachse des Basisteils (1) korreliert und mit der Mittelachse des Arbeitsteils (2) einen Winkel α einschließt, und/oder
- zumindest ein Teil des Arbeitsteils (2) um einen Abstand r parallel zur Bezugsachse (A) des Basisteils (1) versetzt ist;
**dadurch gekennzeichnet, dass** das Arbeitsteil aus einem flexiblen Material mit einer oberen Streckgrenze von weniger als 200 MPa, vorzugsweise von 70 bis 180 MPa, gemessen nach EN ISO 6892-1, hergestellt ist.

2. Endodontisches Instrument nach Anspruch 1, wobei das flexible Material ein metallisches Material ist, vorzugsweise eine Legierung aus rostfreiem Stahl oder eine Nickel-TitanLegierung.

3. Endodontisches Instrument nach Anspruch 1 oder 2, wobei zumindest ein Teil des Arbeitsteils (2) paral-lel zur Bezugsachse (A) des Basisteils (1) versetzt ist, wobei der Abstand r zwischen 0,1 und 1,2 mm, vorzugsweise zwischen 0,3 und 0,9 mm, besonders bevorzugt zwischen 0,4 und 0,7 mm liegt.

4. Endodontisches Instrument nach Anspruch 1 oder 2, wobei der von der Mittelachse (A) des Basisteils (1) und der Mittelachse des Arbeitsteils (2) eingeschlossene Winkel α zwischen 0,01° und 20°, vorzugsweise zwischen 0,1 und 15°, am meisten bevorzugt zwischen 1° und 10° liegt.

5. Endodontisches Instrument nach einem der Ansprüche 1 bis 4, wobei der Arbeitsteil (2) einen Spitzendurchmesser von 0,15 bis 0,60 mm, vorzugsweise von 0,25 bis 0,40 mm, und/oder eine Verjüngung von 0,01 bis 0,08, vorzugsweise von 0,02 bis 0,06 aufweist.

6. Endodontisches Instrument nach einem der Ansprüche 1 bis 5, wobei das endodontische Instrument ferner eine Haltevorrichtung mit einem Handgriff oder einem Antriebsmotor aufweist.

## Revendications

1. Instrument endodontique pour le façonnage anatomique d'une racine ca-nale d'une dent humaine,
- ayant une partie de base (1), qui peut être montée sur un dispositif de maintien et peut être tournée autour d'un axe de référence (A), et
- ayant une partie de travail (2) avec une surface abrasive, qui s'étend depuis la partie de base (1) et a un axe, dans lequel au moins une partie de la partie de travail (2)
- est disposée de manière angulaire par rapport à l'axe de référence (A), l'axe de référence (A) correspondant à l'axe central de la partie de base (1) et formant un angle α avec l'axe central de la partie de travail (2), et/ou
- au moins une partie de la partie de travail (2) est décalée parallèlement à l'axe de référence (A) de la partie de base (1) d'une distance r ;
**caractérisé en ce que** la partie de travail est faite d'un matériau flexible ayant une limite élastique supérieure inférieure à 200 MPa, de préférence de 70 à 180 MPa, mesurée selon la norme EN ISO 6892-1.

2. Instrument endodontique selon la revendication 1, dans lequel le matériau flexible est un matériau métallique, de préférence un alliage d'acier inoxydable ou un alliage nickel-titane.

3. Instrument endodontique selon la revendication 1 ou 2, dans lequel au moins une partie de la partie travaillante (2) est décalée par rapport à l'axe de référence (A) de la partie de base (1), la distance r est comprise entre 0,1 et 1,2 mm, de préférence entre 0,3 et 0,9 mm, plus préférablement entre 0,4 et 0,7 mm.

4. Instrument endodontique selon la revendication 1 ou 2, dans lequel l'angle α délimité par l'axe central (A) de la partie de base (1) et l'axe central de la partie travaillante (2) est compris entre 0,01° et 20°, de préférence entre 0,1 et 15°, plus préférablement entre 1° et 10°.

5. Instrument endodontique selon l'une quelconque des revendications 1 à 4, dans lequel la partie travaillante (2) présente un diamètre de pointe de 0,15 à 0,60 mm, de préférence de 0,25 à 0,40 mm, et/ou une conicité de 0,01 à 0,08, de préférence de 0,02 à 0,06.

6. Instrument endodontique selon l'une quelconque des revendications 1 à 5, dans lequel l'instrument endodontique comprend en outre un dispositif de maintien comprenant un manche ou un moteur d'entraînement.
